# FASCICULE DE BREVET EUROPEEN

(11) **EP 4 091 150 B1**
(45) Date de publication et mention de la délivrance du brevet: **17.09.2025**
(21) Numéro de dépôt: 21706015.1
(22) Date de dépôt: 14.01.2021
(51) Int. Cl.: G08G 1/00, G06Q 10/06, G06Q 10/02, G06Q 30/02, G06Q 30/06, G06Q 30/0601, G06Q 50/40

(54) **PROCÉDÉ ET SYSTÈME POUR INCORPORER DES POSITIONS GÉOGRAPHIQUES DE VÉHICULES DISPONIBLES À LA RÉSERVATION DANS UNE CARTE NUMÉRIQUE**
VERFAHREN UND SYSTEM ZUM EINBEZIEHEN VON GEOGRAPHISCHEN POSITIONEN VON FÜR DIE MIETUNG VERFÜGBAREN FAHRZEUGEN IN EINE DIGITALE KARTE
METHOD AND SYSTEM FOR INCORPORATING GEOGRAPHICAL POSITIONS OF VEHICLES AVAILABLE FOR HIRE INTO A DIGITAL MAP

(30) Priorité: 14.01.2020 FR 2000339
(43) Date de publication de la demande: 23.11.2022
(73) Titulaire: Vulog, 06200 Nice (FR)
(72) Inventeur: COLON, François, 13013 Marseille (FR)
(74) Mandataire: Roman, Alexis
(86) Numéro de dépôt international: PCT/FR2021/050060
(87) Numéro de publication internationale: WO 2021/144535

(56) Documents cités:
- FR-A1- 3 073 309
- US-A1- 2017 316 359

## Description

### Domaine technique.

L'invention concerne un procédé et un système pour incorporer dans une carte numérique, des positions géographiques de véhicules disponibles à la réservation.

Le domaine de l'invention concerne notamment les méthodes permettant de filtrer et/ou sélectionner des positions géographiques de véhicules à afficher sur une carte numérique.

### État de la technique.

On connait des solutions permettant de réserver un véhicule au moyen d'un terminal mobile utilisateur. On connait notamment le service UBER^{®} dont l'application informatique permet réserver une course dans les villes dans lesquelles le service est disponible. Une requête de réservation est envoyée, depuis un terminal mobile utilisateur, vers un serveur. Celui-ci transmet la requête à des chauffeurs situés à proximité de l'utilisateur. Lorsque l'un d'entre eux accepte la course, l'application indique le délai estimé de son arrivée sur le lieu de prise en charge. Une carte numérique, affichée sur le terminal mobile utilisateur, permet de suivre en temps réel l'emplacement et le parcours du chauffeur.

Le document US2011/0112969 (ZAID) décrit une autre solution de réservation de véhicule. Un utilisateur transmet, depuis un terminal mobile de type téléphone intelligent, une requête de réservation à un serveur informatique distant. Ce dernier sélectionne un véhicule disponible et transmet à l'utilisateur des informations d'identification et de position dudit véhicule. La position du véhicule est généralement visible sur une carte numérique affichée sur une interface graphique du terminal utilisateur.

Le document US2017/316359 décrit un procédé permettant de déterminer un emplacement relatif à un service de transport, consistant à déterminer l'emplacement de conducteurs dans une région de prise en charge, à fournir une interface cartographique pour un dispositif informatique mobile et à identifier un emplacement de prise en charge à partir d'emplacements suggérés.

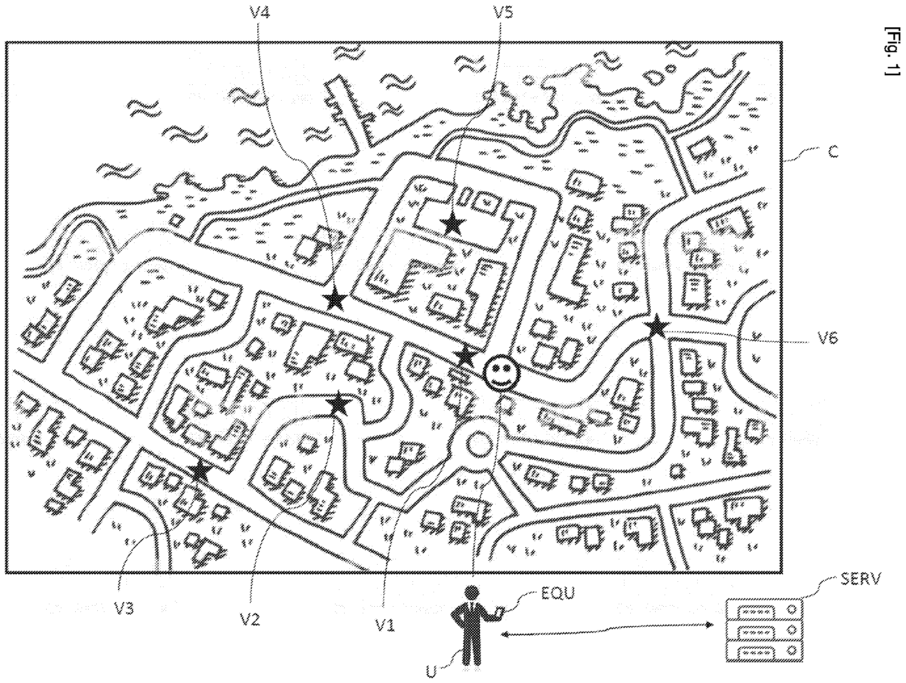

Dans ces systèmes actuels, et comme illustrés sur la figure 1, si un utilisateur U transmet, depuis son terminal utilisateur EQ_{U} et vers le serveur distant SERV, une requête de réservation à un instant T0, ledit serveur génère et affiche sur ledit terminal, une carte numérique indiquant généralement toutes les positions géographiques réelles à T0, des véhicules V₁-V₆ disponibles à la réservation. Les ressources informatiques mobilisées par le serveur SERV, les temps de calcul et la bande passante sur le réseau R sont donc élevés dans la mesure où toutes les positions géographiques réelles des véhicules V₁-V₆ sont incorporées dans la carte numérique C affichée sur une interface graphique du terminal utilisateur. L'utilisateur U va naturellement sélectionner le véhicule V1 qui est le plus proche de lui. Le choix de véhicules susceptibles d'être réservés par l'utilisateur U est donc, en pratique, particulièrement restreint.

Un objectif de l'invention est de remédier à cet état des choses. En particulier, un autre objectif de l'invention est de proposer une méthode permettant de réduire les ressources informatiques mobilisées par un serveur, les temps de calcul et la bande passante sur le réseau R permettant d'afficher sur une carte numérique, la position géographique de véhicules disponibles à la réservation.

### Présentation de l'invention.

La solution proposée par l'invention est un procédé pour incorporer des positions géographiques de véhicules disponibles à la réservation dans une carte numérique, ledit procédé comprenant les étapes suivantes :
- a) recevoir à un instant T0, depuis un terminal mobile utilisateur, la position géographique dudit terminal mobile et une requête de réservation,
- b) calculer automatiquement, au moyen d'un module de calcul, des données définissant une première zone géographique centrée sur la position géographique du terminal mobile reçu à l'instant T0,
- c) calculer automatiquement, au moyen du module de calcul, des données définissant une seconde zone géographique incluse dans la première zone géographique et dont le centre correspond à la position géographique du terminal mobile et dont le rayon correspond à une distance, laquelle distance est définie automatiquement ou est incluse dans la requête de réservation en étant renseignée par un utilisateur depuis une interface du terminal mobile,
   - -d) recevoir les positions géographiques réelles, à l'instant T0, de véhicules disponibles à la réservation, lesquelles positions géographiques sont reçues d'équipements embarqués dans lesdits véhicules ou sont reçues de terminaux mobiles d'utilisateurs utilisant lesdits véhicules,
- e) effectuer automatiquement, au moyen d'un module de traitement informatique, une première sélection de véhicules disponibles à la réservation dont la position géographique réelle à l'instant T0, est incluse dans la première zone géographique,
- f) pour chacun desdits véhicules sélectionné lors de la première sélection :
   -- f1) calculer automatiquement, au moyen d'un module de calcul d'itinéraire, un itinéraire entre : un point de départ correspondant à la position géographique réelle dudit véhicule à T0; et un point d'arrivée défini par rapport à la position géographique du terminal mobile,
   -- f2) calculer automatiquement, au moyen du module de calcul, une position géographique estimée du véhicule à un instant T2 sur l'itinéraire calculé, où T2>T0,
- g) effectuer automatiquement, au moyen du module de traitement informatique, une deuxième sélection de véhicules disponibles à la réservation dont la position géographique estimée est incluse dans la seconde zone géographique,
- h) à un instant T1 tel que T2>T1≥T0 : incorporer automatiquement dans une carte numérique affichée sur une interface graphique du terminal mobile, uniquement les positions géographiques estimées desdits véhicules à l'instant T2 et qui sont sélectionnés lors de la deuxième sélection.

La carte qui s'affiche à l'instant T1 indique non plus la position réelle des véhicules comme dans les solutions de l'art antérieur, mais une position estimée (future) desdits véhicules à un instant T2>T1. T2 étant le temps mis par les véhicules s'ils se déplaçaient vers l'utilisateur en suivant l'itinéraire calculé. Les sélections opérées sur les véhicules permettent de réduire le nombre de positions affichées sur la carte numérique et de fait permettent de réduire les ressources informatiques mobilisées, les temps de calcul et la bande passante sur le réseau. Nonobstant cette réduction, la carte va toutefois pouvoir afficher les positions d'un plus grand nombre de véhicules situés à proximité de l'utilisateur de sorte qu'un choix plus large est offert à l'utilisateur.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le procédé comprend les étapes suivantes : - calculer automatiquement, au moyen du module de calcul, et pour chaque itinéraire calculé à l'étape f1), le temps de trajet du véhicule concerné par ledit itinéraire, entre le point de départ et le point d'arrivée ; - effectuer une troisième sélection des véhicules disponibles à la réservation dont le temps de trajet calculé est égal ou inférieur à un délai déterminé ; - réaliser l'étape h) uniquement pour les véhicules sélectionnés lors de la troisième sélection et dont le temps de trajet calculé est égal ou inférieur au délai déterminé.
- Selon un mode de réalisation, le délai utilisé pour effectuer la troisième sélection est un délai renseigné depuis une interface du terminal mobile, lequel délai est inclus dans la requête de réservation.
- Selon un mode de réalisation, l'instant T2 correspond à l'instant T0 auquel est rajouté un délai renseigné depuis une interface du terminal mobile, lequel délai est inclus dans la requête de réservation.
- Selon un mode de réalisation, le rayon de la première zone géographique est calculé automatiquement et dépend du délai renseigné et inclus dans la requête de réservation.
- Selon un mode de réalisation, le rayon de la seconde zone géographique est défini automatiquement en prenant en compte une distance moyenne calculée sur la base de distances de récupération habituellement renseignées par des utilisateurs.
- Selon un mode de réalisation, à l'étape h), la position géographique estimée de chaque véhicule à l'instant T2 est affichée sur une interface graphique du terminal mobile utilisateur, sous la forme d'un marqueur sélectionnable, chaque dit marqueur étant associé à un identifiant du véhicule concerné.

Un autre aspect de l'invention concerne un système comportant au moins comportant un terminal mobile d'un utilisateur et un serveur informatique distant, configurés pour la mise en oeuvre des étapes du procédé selon l'une des caractéristiques précédentes.

Encore un autre aspect de l'invention concerne un produit programme d'ordinateur comprenant des instructions de code pour l'exécution d'un procédé selon l'une des caractéristiques précédentes, lorsqu'il est exécuté par un serveur informatique distant.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] précitée illustre un exemple de carte numérique sur laquelle sont indiquées des positions géographiques de véhicules disponibles à la réservation,
[Fig. 2] illustre un exemple de carte numérique sur laquelle sont indiqués des positions géographiques de véhicules disponibles à la réservation à un instant T0 ; une première zone géographique et une seconde zone géographique, centrées sur l'emplacement d'un terminal mobile utilisateur, sont également représentées,
[Fig. 3] montre la carte de la figure 2 sur laquelle sont illustrés des itinéraires de véhicules,
[Fig. 4] montre la carte de la figure 3 sur laquelle sont illustrés des positions géographiques estimées de véhicules à un instant T2>T0,
[Fig. 5] est un exemple de carte numérique obtenue selon le procédé objet de l'invention.
[Fig. 6] représente un synoptique des principales étapes d'un procédé selon l'invention.
[Fig. 7] schématise l'agencement de différents éléments d'un terminal utilisateur, d'un équipement informatique embarqué dans un véhicule et d'un serveur informatique distant.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en œuvre une ou plusieurs applications informatiques exécutées par des équipements ou serveurs informatiques. Par souci de clarté, il faut comprendre au sens de l'invention que « *un équipement ou serveur fait quelque* chose » signifie « *l'application informatique exécutée par une unité de traitement de l'équipement ou du serveur fait quelque chose* ». Tout comme *« l'application informatique fait quelque* chose » signifie « *l'application informatique exécutée par l'unité de traitement de l'équipement ou du serveur fait quelque chose* ».

Encore par souci de clarté, la présente invention fait référence à un ou plusieurs « *processus informatiques logiques ».* Ces derniers correspondent aux actions ou résultats obtenus par l'exécution d'instructions de différentes applications informatiques. Aussi, il faut également comprendre au sens de l'invention que *« un processus informatique logique est adapté pour faire quelque chose* » signifie « *les instructions d'une application informatique exécutées par une unité de traitement font quelque* chose ».

Encore par souci de clarté, les précisions suivantes sont apportées à certains termes utilisés dans la description et les revendications :
- « *Ressource informatique »* peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « *Serveur informatique »* peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- *« Requête* » désigne un ordre d'exécution pouvant suivre un protocole de communication et comprenant des paramètres en entrée (question, informations, ...) et éventuellement des paramètres en retour (réponse, information, ...), pouvant se présenter dans un format lié au protocole employé.
- *« Unité de traitement »* peut être compris de façon non limitative comme : processeur, microprocesseurs, CPU (pour Central Processing Unit), etc.
- *« Application informatique »* peut être comprise comme : logiciel, programme informatique, micros-programme informatique, lignes de codes exécutables, software, etc.
- « *Réseau de données »* peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- « *Service* » peut être compris de façon non limitative comme l'ensemble des fonctionnalités proposé et assuré par un serveur et/ou par au moins un équipement informatique. Le service peut comprendre par exemple, les fonctionnalités suivantes : réservation d'un véhicule, localisation (réelle et/ou estimée) d'un véhicule, verrouillage/déverrouillage d'un véhicule, etc.
- *« Véhicule partagé* » peut être compris de façon non limitative comme un véhicule de location ou un véhicule en libre-service (en anglais « *car sharing »)* mis à la disposition de « clients » ou membres. Le véhicule peut être : une voiture autonome (apte à rouler sur route, sans intervention d'un conducteur), une voiture ou un camion (moteur thermique et/ou électrique), un deux-roues motorisé (moteur thermique et/ou électrique), un vélo (classique ou avec assistance électrique), une trottinette (classique ou avec assistance électrique), une planche à roulettes, un monocycle électrique, un gyropode, un bateau, etc. Lorsqu'un utilisateur utilise un véhicule partagé, il peut être facturé d'un certain montant dépendant généralement du nombre de kilomètres parcourus et/ou du temps d'utilisation du véhicule et/ou du modèle ou type de véhicule.
- « *Carte numérique »* peut être comprise comme une représentation réelle ou illustrée d'une zone géographique. La carte numérique est destinée à être affichée sur un écran ou une autre interface graphique d'un équipement informatique. La carte numérique est générée au d'un générateur de carte de type logiciel de cartographie, par exemple le logiciel Google Map^{®}.
- Tel qu'utilisé ici, sauf indication contraire, l'utilisation des adjectifs ordinaux «premier», «deuxième», etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

### Système

Un système pour la mise en œuvre du procédé selon l'invention comprend un terminal mobile utilisateur EQ_{U} et un serveur distant SERV, configurés pour la mise en œuvre des étapes dudit procédé, et plus particulièrement pour afficher la position géographique de véhicules V₁-V₆ disponibles à la réservation.

À titre d'exemple illustratif, les véhicules V₁-V₆ sont les véhicules autonomes ayant un statut « disponible à la réservation ». Il pourrait également s'agir de véhicules du type taxi, d'un véhicule VTC (pour l'acronyme « Véhicule de Tourisme avec Chauffeur ») ou des véhicules dont les chauffeurs sont inscrits au service UBER^{®}.

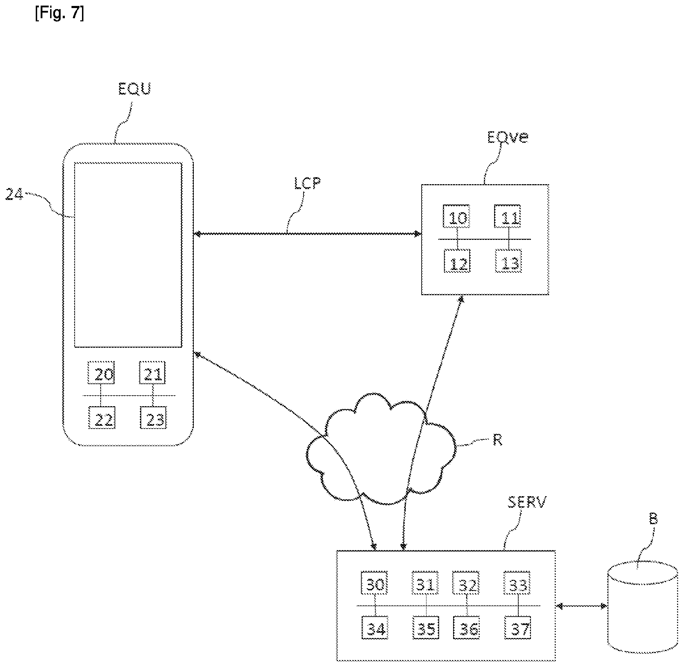

En se rapportant à la figure 7, chaque véhicule Vᵢ intègre préférentiellement un équipement informatique embarqué EQ_{VEi}. Cet équipement peut par exemple faire partie d'un boîtier télématique permettant au véhicule d'échanger des informations (ex : position géographique, vitesse, ...) avec un serveur distant SERV, au travers d'un réseau de données R. L'équipement informatique EQ_{VEi} peut également être un équipement dédié, indépendant du boîtier télématique.

Chaque équipement embarqué EQ_{VEi} comprend, entre autres ressources informatiques, une unité de traitement 10, un émetteur/récepteur de signaux 11, et une ou plusieurs mémoires 12 dans laquelle est enregistrée une application informatique. L'équipement embarqué EQ_{VEi} comprend également une interface de communication 13. Ces différents éléments sont connectés au moins à l'unité de traitement 10 par un bus de communication.

Les instructions de l'application informatique enregistrée dans la mémoire 12, lorsqu'elles sont exécutées par l'unité de traitement 10, permettent de réaliser des étapes du procédé qui sont décrites plus avant dans la description. La mémoire 12 est également adaptée pour enregistrer un certain nombre d'autres d'informations.

L'émetteur/récepteur 11 est adapté pour échanger des signaux, via une liaison sans fil de courte portée L_{CP}, avec le terminal utilisateur EQ_{U} décrit plus avant dans la description et/ou avec les équipements embarqués des autres véhicules. La liaison L_{CP} a par exemple une portée inférieure ou égale à 100 mètres. Les signaux échangés sont préférentiellement des signaux infrarouges ou des signaux radiofréquences. La liaison L_{CP} utilise préférentiellement un protocole de communication de la famille suivante : Bluetooth, Wifi, Z-Wave, ANT, ZIGBEE, Infrarouge.

L'interface de communication 13, par exemple GSM, 3G, 4G ou Wifi, est adapté pour établir une liaison de communication sans fil avec l'interface de communication 32 du serveur distant SERV, au travers du réseau de données R.

Chaque véhicule V₁-V₆ est associé à un numéro d'identification unique (par exemple un code numérique ou un code alphanumérique) enregistré dans la base de données B.

À un instant donné, les véhicules V₁-V₆ peuvent être :
- avec un statut dit « Disponible » : le véhicule est stationné (garé) et/ou non réservé,
- avec un statut dit « Indisponible » : soit le véhicule est stationné, mais déjà réservé par un utilisateur (statut « Indisponible-Réservé »), soit le véhicule est en cours de fonctionnement (statut « Indisponible-en fonctionnement »).

L'utilisateur U dispose d'au moins un terminal mobile EQ_{U}. Ce dernier consiste préférentiellement en un téléphone intelligent (Smartphone), une tablette numérique, un ordinateur portable, etc.

Sur la figure 7, le terminal EQu intègre une unité de traitement 20, un émetteur/récepteur de signaux 21 et une ou plusieurs mémoires 22 dans laquelle est enregistrée une application informatique pour la mise en oeuvre du service (« application-service »), une interface de communication 23 et une interface graphique 24 du type écran tactile. Ces différents éléments sont connectés au moins à l'unité de traitement 20 par un bus de communication. Il comprend également les ressources informatiques permettant de réaliser des étapes du procédé de l'invention. L'émetteur/récepteur 21 est similaire à celui des équipements embarqués EQ_{VEi}. L'interface de communication 23, par exemple GSM, 3G, 4G ou Wifi, est adapté pour établir une liaison de communication sans fil avec l'interface de communication 32 du serveur distant SERV, au travers du réseau de données R.

Selon un exemple, pour télécharger l'application-service, et avoir les droits d'accès au service, l'utilisateur U doit préalablement s'enregistrer auprès d'un serveur de gestion de droits qui peut être ou non le serveur distant précité. Selon un mode de réalisation, l'enregistrement de l'utilisateur U est réalisé auprès d'un service web du serveur distant SERV associé au service. L'enregistrement comporte l'enregistrement d'un identifiant utilisateur et/ou d'un identifiant du terminal EQ_{U}. Il peut s'agir d'un port, d'une adresse IP, d'une adresse MAC ou toute autre adresse ou combinaisons permettant d'identifier le terminal EQu. Selon un mode de réalisation, l'utilisateur U est préinscrit à partir d'un logiciel et est connu du fait qu'un identifiant est enregistré dans une base de données B.

Sur la figure 7, le serveur SERV intègre une unité de traitement 30, une ou plusieurs mémoires 31, une interface de communication 32, un module de localisation 33, un module de calcul d'itinéraire 34, un module de calcul 35, un générateur de carte numérique 36, un module traitement informatique 37, qui sont mutuellement connectées via un bus. Une ou plusieurs applications informatiques sont enregistrées dans la ou les mémoires 31 et dont les instructions, lorsqu'elles sont exécutées par l'unité de traitement 30, permettent de réaliser les fonctionnalités décrites plus avant dans la description.

Les modules de localisation 33, de calcul d'itinéraire 34, de calcul 35, de traitement 37 et le générateur de carte 36, sont des composants matériels et/ou logiciels du serveur SERV.

Le serveur SERV met régulièrement à jour, préférentiellement en temps réel, la base de données B. Cette base de données regroupe notamment : l'identifiant de chaque véhicule Vᵢ, leur statut (« Disponible » ou « Indisponible »), et leur position géographique. D'autres informations et/ou données peuvent être regroupées dans la base de données B, le cas échéant. La base de données B peut être enregistrée dans une zone mémoire du serveur SERV ou être distante dudit serveur.

L'information sur le statut d'un véhicule Vᵢ est transmise au serveur SERV en temps réel ou a des intervalles de temps prédéfinis (par exemple toutes les 5 minutes). Cette information peut être transmise au serveur SERV, par exemple depuis l'équipement embarqué EQ_{VEi} du véhicule Vᵢ suite à une détection d'un évènement. Cet évènement est par exemple généré par une action de l'utilisateur ou du chauffeur sur une commande spécifique aménagée sur le tableau de bord du véhicule Vᵢ. Cette commande peut être actionnée lorsqu'un utilisateur a stationné son véhicule et libéré le véhicule ou qu'un chauffeur a terminé une course. Le statut passe alors de « Indisponible » à « Disponible ».

Lorsque le serveur SERV reçoit une requête de réservation de la part de l'utilisateur U et qu'il peut faire droit à cette requête (c'est-à-dire qu'un véhicule est disponible à la réservation), ledit serveur fait passer le statut d'un véhicule de « Disponible » à « Indisponible ». Cette requête de réservation est préférentiellement générée via le terminal mobile utilisateur EQ_{U}.

La position géographique des véhicules V₁-V₆ peut être obtenue par satellite (système GPS ou Galileo) ou par un système de triangulation (par exemple, un système utilisant les cellules d'un réseau 4G) ou par une combinaison des deux systèmes de localisation. L'équipement EQ_{VEi} d'un véhicule Vᵢ comporte avantageusement un composant, par exemple un composant GPS, permettant d'obtenir une information de géo-localisation qui peut être récupérée par le module de localisation 33 du serveur SERV. Le module de localisation 33 peut récupérer automatiquement cette information en interrogeant en temps réel ou à intervalles de temps régulier (par exemple toutes les 5 minutes), les équipements EQ_{VEi} des véhicules. Les équipements EQ_{VEi} des véhicules peuvent également transmettre automatiquement cette information au module de localisation 33 (sans répondre à une requête d'interrogation), en temps réel ou à intervalles de temps régulier (par exemple toutes les 5 minutes). La position géographique de chaque véhicule Vᵢ est alors enregistrée dans la base de données B.

Selon une alternative, la position géographique d'un véhicule Vᵢ peut correspondre à la position géographique (obtenue par satellite et/ou par un système de triangulation) d'un terminal mobile (par exemple un Smartphone) d'un utilisateur ou d'un chauffeur utilisant ledit véhicule. Cette position géographique est automatiquement récupérée par le module de localisation 33 ou transmise à celui-ci.

La position géographique du terminal EQu peut être obtenue de la même façon. Par satellite et/ou ou par un système de triangulation. Le terminal EQ_{U} comporte avantageusement un composant, par exemple un composant GPS, permettant d'obtenir une information de géo-localisation qui peut être automatiquement récupérée par le module de localisation 33 ou transmise à celui-ci.

### Procédé

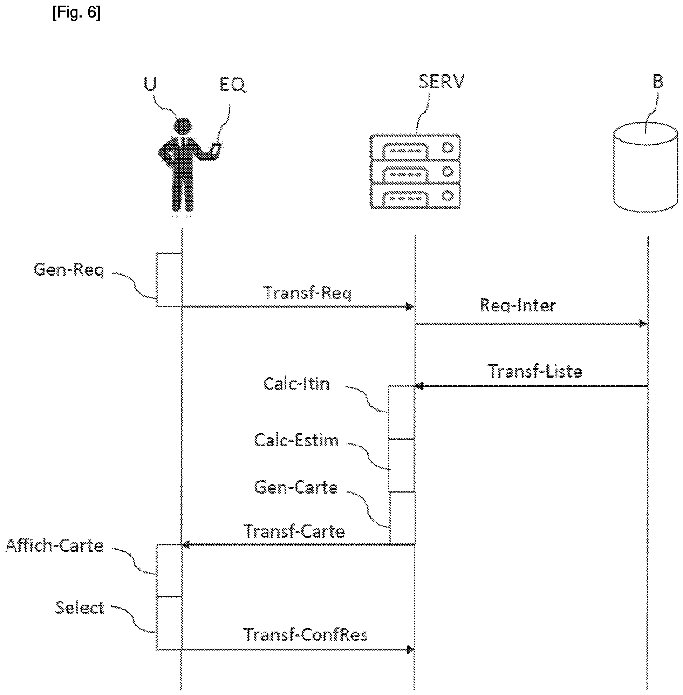

La figure 6 illustre des étapes d'un procédé selon l'invention. L'utilisateur U souhaite réserver un véhicule. Selon un mode de réalisation, l'utilisateur U génère, depuis son terminal EQ_{U}, une requête de réservation (Gen_Req) indiquant qu'il souhaite récupérer un véhicule. L'utilisateur peut également préciser qu'il souhaite récupérer un véhicule dans un délai déterminé et à une distance déterminée de sa position. Par exemple, l'utilisateur U souhaite disposer d'un véhicule dans 15 minutes maximum, et à 200 mètres maximum de sa position. Cette requête est générée en lançant l'application-service et en renseignant les informations de délai et de distance depuis l'interface graphique 24 du terminal EQ_{U}.

Selon un mode de réalisation, cette requête de réservation est transmise (Transf_Req) au serveur SERV, depuis le terminal EQ_{U}, à un instant T0 (par exemple à 16h00). La requête de réservation peut directement contenir la position géographique du terminal EQu. De manière alternative, à réception de la requête de réservation, le module de localisation 33 du serveur SERV peut récupérer automatiquement cette position géographique.

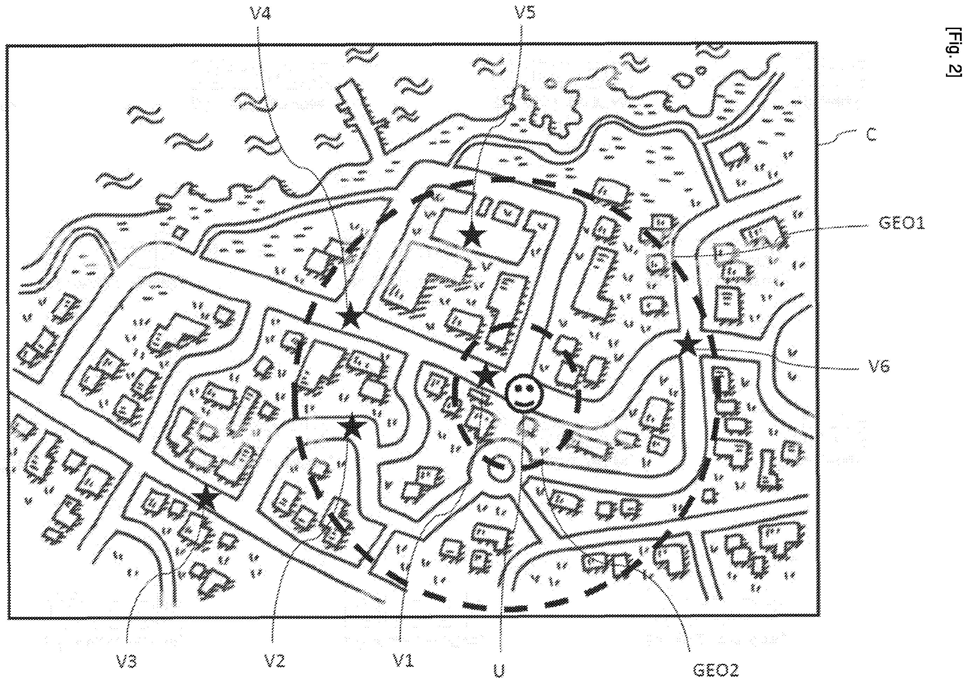

Selon un mode de réalisation, lorsque le serveur SERV reçoit la requête de réservation à l'instant T0, il interroge (Req_Inter) la base de données B pour identifier les véhicules disponibles à la réservation, c'est-à-dire ayant un statut « Disponible » à T0. Dans l'exemple illustrait de la figure 2, tous les véhicules V₁-V₆ sont considérés comme disponibles à la réservation. La base de données B renvoie au serveur SERV la liste (ou les identifiants) des véhicules V₁-V₆ (Transf_Liste) avec leur position géographique réelle à T0. De manière alternative, à réception de la liste, le module de localisation 33 du serveur SERV peut interroger chaque véhicule de ladite liste pour récupère leur position géographique réelle à T0.

Pour réduire les ressources informatiques mobilisées par le serveur SERV, les temps de calcul et la bande passante sur le réseau R, il est avantageux de circonscrire la recherche et le traitement, aux véhicules situés à une distance raisonnable de l'utilisateur. Par « raisonnable », on entend une distance telle que les véhicules aient une bonne probabilité d'arriver jusqu'à l'utilisateur U dans le délai indiqué dans la requête de réservation. L'étendue de cette distance peut être déterminée par un algorithme prenant en compte notamment le type de véhicule, et le type de zone où se trouve l'utilisateur (urbaine, rurale, ...). Par exemple, en zone urbaine, on peut considérer qu'un véhicule de type voiture, circule en moyenne à 30Km/h. Une règle de proportionnalité permet d'estimer que dans un délai D, le véhicule parcours 30xD/60 Km. Par exemple, si le délai est de 15 min, cette distance est alors d'environ 7,5 Km. La recherche et le traitement vont alors être circonscrits aux véhicules situés dans un rayon de 7,5 km autour de la position géographique de l'utilisateur.

Aussi, à réception de la requête de réservation, le module de calcul 35 du serveur SERV, calcule avantageusement automatiquement des données définissant une première zone géographique centrée sur la position géographique du terminal EQ_{U} à l'instant T0. Cette zone géographique est illustrée sur la figure 2 et porte la référence GEO₁. Le centre de cette zone correspond à la position du terminal EQu et son rayon correspond à la distance « raisonnable » précitée (par ex : 7,5 Km).

Les seuls véhicules sélectionnés vont être ceux qui, à T0, sont disponibles à la réservation et ont une position géographique réelle incluse dans la première zone GEO₁. Sur l'exemple de la figure 2, seuls les véhicules V₁, V₂, V₄, V₅ et V₆ vont être sélectionnés, le véhicule V₃ étant situé, à T0, en dehors de la première zone GEO₁. Selon un mode de réalisation, cette sélection est réalisée par le module de traitement 37 du serveur SERV, lorsque ledit serveur reçoit la liste des véhicules V₁-V₆ (Transf_Liste) avec leur position géographique réelle à T0. Selon un autre mode de réalisation, les données relatives à la première zone GEO₁ sont intégrées dans la requête d'interrogation (Req_Inter), de sorte que seuls les identifiants et positions géographiques réelles des véhicules V₁, V₂, V₄, V₅ et V₆ sont récupérés dans la base de données B.

Pour chaque véhicule V₁-V₆, le serveur SERV calcule automatiquement un itinéraire (figure 6 ; Calc_Itin) entre : un point de départ correspondant à la position géographique réelle dudit véhicule à T0 ; et un point d'arrivée défini par rapport à la position géographique du terminal EQu. Selon un mode préféré de réalisation, ce calcul n'est effectué que pour les véhicules V₁, V₂, V₄, V₅ et V₆ inclus dans la première zone GEO₁. Le calcul des itinéraires est effectué par le module de calcul d'itinéraire 34 (par exemple du type Mapquest^{®} ou Google Maps^{®}) du serveur SERV.

Le point d'arrivée peut coïncider avec la position géographique du terminal EQ_{U}. Selon un mode de réalisation, le module de calcul 35 du serveur SERV, calcule avantageusement des données définissant une seconde zone géographique centrée sur la position géographique du terminal EQu à l'instant T0. Cette seconde zone géographique est illustrée sur la figure 2 et porte la référence GEO₂. Le centre de cette zone correspond à la position du terminal EQu et son rayon correspond à la distance de récupération qui est indiquée dans la requête de réservation (Gen_Req) et à laquelle l'utilisateur accepte de récupérer le véhicule. En reprenant l'exemple précité, le rayon de la seconde zone GEO₂ est de 200 mètres. Dans ce mode de réalisation, le point d'arrivée correspond à un point d'entrée du véhicule dans la seconde zone GEO₂. Dans le cas où le point d'arrivée coïncide avec la position du terminal EQu, on peut considérer que la seconde zone GEO₂ a un rayon nul.

Si la requête de réservation ne contient pas de distance de récupération, le rayon de la seconde zone GEO₂ peut être défini automatiquement par le serveur SERV, par exemple en prenant en compte une distance de récupération moyenne calculée sur la base de distances de récupération habituellement renseignées par des utilisateurs du service.

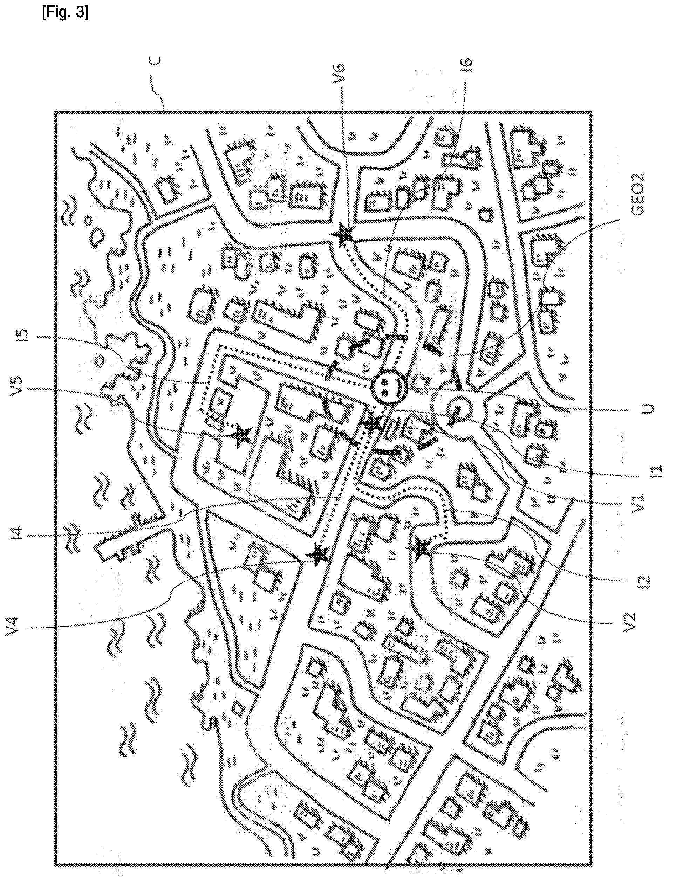

Selon un mode préféré de réalisation, pour chaque véhicule V₁, V₂, V₄, V₅ et V₆, le serveur SERV, et plus spécifiquement son module de calcul d'itinéraire 34, élabore automatiquement l'itinéraire le plus rapide et/ou le plus court entre le point de départ et le point d'arrivée. Dans un exemple, le calcul des itinéraires prend en compte le trafic routier de manière à proposer le chemin le plus rapide pour arriver au point d'arrivée. Ces itinéraires sont schématisés et référencés respectivement I₁, I₂, I₄, I₅, I₆ sur la figure 3.

Pour chaque véhicule V₁, V₂, V₄, V₅ et V₆ dont un itinéraire a été calculé, le module de calcul 35 du serveur SERV calcule automatiquement une position géographique estimée (Calc_Estim) dudit véhicule à un instant T2>T0 sur ledit itinéraire. Selon un mode de réalisation, cet instant T2 correspond à l'instant T0 auquel est rajouté le délai indiqué dans la requête de réservation (Gen_Req) et durant lequel l'utilisateur souhaite récupérer le véhicule. En reprenant l'exemple précité, l'utilisateur génère la requête de réservation à T0=16h00 en indiquant qu'il souhaite disposer d'un véhicule dans 15 minutes, d'où T2=16h15. En d'autres termes, à T0 (abstraction faite des latences de calcul), le serveur SERV va prédire quelle sera la position future du véhicule Vᵢ sur l'itinéraire Iᵢ à l'instant T2. Cette prédiction prend préférentiellement en compte la nature du véhicule Vᵢ (et donc une vitesse de déplacement moyenne prédéfinie) et l'état du trafic routier sur l'itinéraire Iᵢ. Si la requête de réservation ne contient pas de délai, l'instant T2 peut être prédéfini automatiquement par le serveur SERV, par exemple en prenant en compte un délai moyen calculé sur la base des délais habituellement renseignés par des utilisateurs du service.

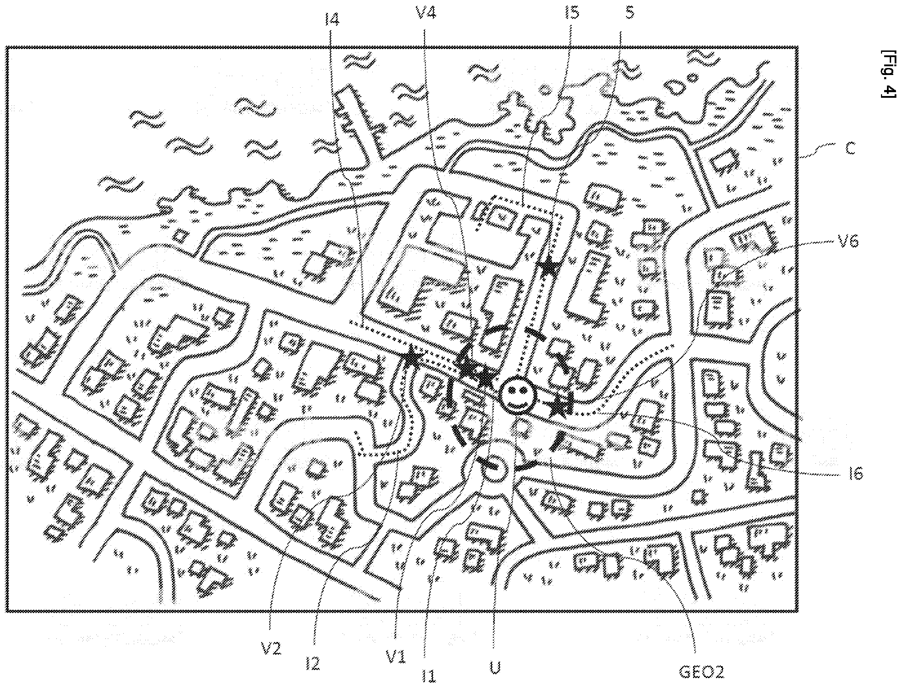

Le générateur de carte 36 va ensuite générer une carte numérique (Gen_Carte) sur laquelle seront automatiquement incorporées les seules positions géographiques estimées des véhicules V₁, V₂, V₄, V₅ et V₆. Les données de cette carte et de ces positions sont transmises au terminal EQ_{U} (Transf_Carte). Ce dernier affiche (Affich_Carte) sur son interface 24, la carte et uniquement les positions géographiques estimées des véhicules V₁, V₂, V₄, V₅ et V₆. Une telle carte C est visible sur la figure 4.

La carte numérique C s'affiche sur le terminal EQ_{U} à un instant T1<T2. Cet instant T1 peut correspondre à l'instant T0, en faisant abstraction des latences de calcul (T1=T0). En prenant en compte les éventuelles latences de calcul, T1 peut être légèrement supérieur à T0, par exemple de quelques millisecondes ou quelques secondes. La carte C s'affiche alors sur le terminal EQ_{U} avec un retard par rapport à l'envoi de la requête de réservation (Transf_Req).

Comparée à la carte de la figure 1, la carte de la figure 4 affiche un nombre moins important de véhicules de sorte que les ressources informatiques mobilisées par le serveur SERV sont réduites, ainsi que les temps de calcul et la bande passante sur le réseau R. Mais les véhicules de la figure 4 sont plus proches de la position de l'utilisateur U, de sorte que ce dernier a davantage de choix.

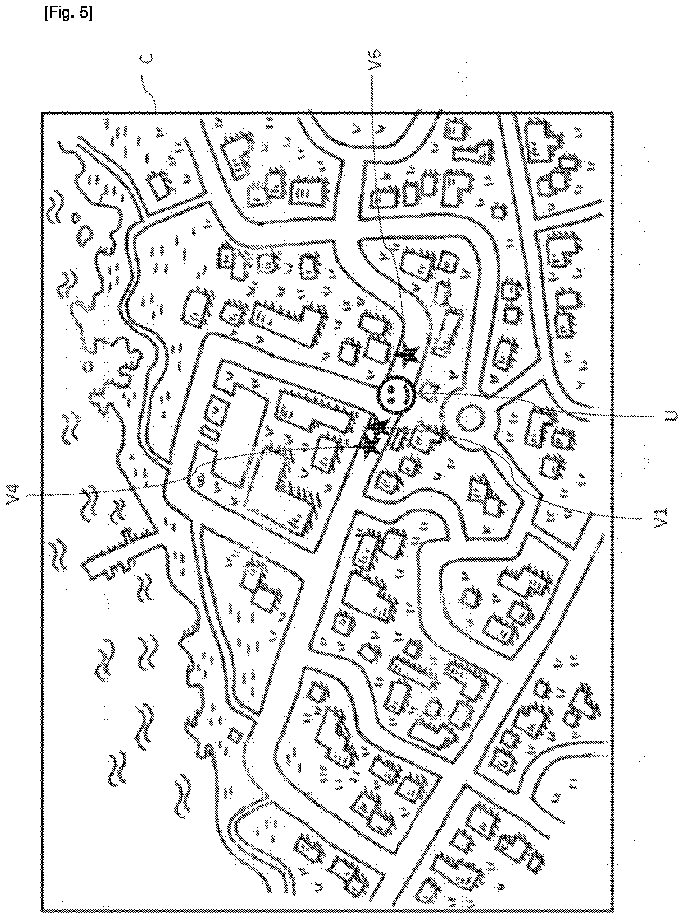

Les seuls véhicules dont la position géographique estimée va être affichée sont ceux dont cette position estimée est incluse dans la seconde zone GEO₂. Pour ce faire, le serveur SERV sélectionne uniquement les véhicules dont la position géographique estimée est incluse dans la seconde zone GEO₂. Sur l'exemple de la figure 5, seuls les véhicules V₁, V₄ et V₆ vont être sélectionnés, les véhicules V₂ et V₅ étant situés, à T2, en dehors de la seconde zone GEO₂. Selon un mode de réalisation, cette seconde sélection est réalisée par le module de traitement 37 du serveur SERV, après que ledit serveur ait calculé les positions géographiques estimées (Calc_Estim) et avant le transfert des données de la carte (Transf_Carte).

La seconde sélection peut être basée sur une analyse et une comparaison des données délimitant la seconde zone GEO₂ et celles définissant les positions estimées des véhicules.

Selon une autre mode de réalisation, on effectue une sélection basée sur une analyse des temps de trajets des véhicules V₁, V₂, V₄, V₅, V₆ sur les itinéraires I₁, I₂, I₄, I₅, I₆. Le module de calcul 35 du serveur SERV calcule, pour chaque itinéraire Iᵢ, le temps de trajet du véhicule concerné Vᵢ, entre le point de départ et le point d'arrivée (soit l'entrée dans la seconde zone géographique GEO₂, soit la position géographique du terminal EQu). Seuls vont être sélectionnés les véhicules dont le temps de trajet calculé est égal ou inférieur au délai déterminé dans la requête de réservation (Gen_Req), c'est-à-dire 15 minutes en reprenant l'exemple précité. Si la requête de réservation ne contient pas un tel délai, celui-ci peut être déterminé automatiquement par le serveur SERV, par exemple en prenant en compte un délai moyen calculé sur la base des délais habituellement renseignés par des utilisateurs du service. En prenant l'exemple de la figure 5, le module de calcul 35 calcule que seuls les véhicules V₁, V₄ et V₆ ont un temps de trajet inférieur ou égal au délai déterminé. Les autres véhicules V₂ et V₅ ont un temps de trajet supérieur. Les véhicules V₁, V₄ et V₆ vont alors être sélectionnés pour que leur position estimée soit affichée sur la carte C.

La position géographique estimée de chaque véhicule V₁, V₄, V₆ est préférentiellement affichée sur l'interface graphique 24 du terminal EQu, sous la forme d'un marqueur sélectionnable, se présentant par exemple sous la forme d'un point ou d'une icône (ex : une étoile sur la figure 5). D'autres informations peuvent s'afficher en complément du marqueur et notamment des informations d'identification permettant à l'utilisateur U d'identifier très simplement et très rapidement un véhicule Vᵢ. Ces informations peuvent être : le code (numérique ou alphanumérique) de sa plaque d'immatriculation, et/ou son modèle et/ou sa couleur et/ou son image ou photo, etc.

Chaque marqueur est avantageusement associé à l'identifiant du véhicule Vᵢ concerné V₁, V₄, V₆. Ces identifiants sont récupérés par le serveur SERV dans la base de données B et associés aux données transmises à l'étape Transf_Carte.

En se rapportant à la figure 6, lorsque l'utilisateur U sélectionne (Select) un des marqueurs, par exemple celui du véhicule V₆, le terminal EQ_{U} génère et transmet au serveur informatique SERV, une confirmation de réservation (Transf_ConfRes). Cette confirmation contient l'identifiant du véhicule V₆.

A réception de la confirmation de réservation, le serveur SERV va alors réserver le véhicule V₆. Celui-ci va alors commencer son trajet pour atteindre sa position estimée. Si le véhicule V₆ est un véhicule autonome, le serveur SERV transmet à l'équipement EQ_{VE6}, une commande pour lancer son trajet selon l'itinéraire I₆, jusqu'à sa position estimée. Si le véhicule V₆ est un véhicule de type taxi ou VTC, le serveur SERV transmet un message au chauffeur (par exemple par mail ou SMS), pour lui indiquer par exemple de se rendre jusqu'à la position estimée en suivant l'itinéraire I₆. Selon un mode de réalisation, la carte C affiche une information sur l'emplacement en temps réel du véhicule V₆ sur l'itinéraire I₆, de sorte que l'utilisateur U puisse suivre son déplacement en temps réel.

A réception de la confirmation de réservation par le serveur SERV, dans la base de données B, le statut du véhicule V₆ va passer de « Disponible » à « Indisponible » de sorte qu'aucun autre utilisateur ne pourra l'utiliser. L'utilisateur U est ainsi assuré que le véhicule V₆ sera disponible lorsqu'il atteindra sa position estimée. La mention « Indisponible à la réservation » peut en outre s'afficher sur une interface graphique installée de manière visible sur le véhicule Vs.

En complément ou en substitution de la modification du statut du véhicule V₆, le serveur SERV peut rendre physiquement inutilisable ledit véhicule par des personnes autres que l'utilisateur U. En effet, le véhicule V₆ peut être équipé d'un dispositif de verrouillage/déverrouillage à distance. Il peut par exemple s'agir d'un dispositif anti-démarrage du moteur piloté par l'équipement embarqué EQ_{VE6}. Le serveur SERV transmet alors à l'équipement EQ_{VE6}, une commande d'activation du dispositif de verrouillage, rendant momentanément le véhicule V₆ inutilisable. Lorsque l'utilisateur U accède au véhicule V₆, il peut transmettre à l'équipement embarqué EQ_{VE6}, depuis son terminal EQu, par exemple via la liaison sans fil de courte portée L_{CP}, une commande de désactivation du dispositif de verrouillage, rendant ledit véhicule utilisable. De manière alternative, le serveur SERV peut détecter, notamment par géo-localisation, que la position de l'utilisateur (i.e. de son équipement EQ_{U}), coïncide avec celle du véhicule V₆. Dès lors, c'est le serveur SERV qui transmet à l'équipement EQ_{VE6} la commande de désactivation.

### Produit programme d'ordinateur

Selon encore un autre aspect, l'invention concerne un produit programme d'ordinateur comprenant des instructions de code pour l'exécution du procédé selon l'invention, lorsqu'il est exécuté par le terminal mobile EQ_{U}.

L'agencement des différents éléments et/ou moyens et/ou étapes de l'invention, dans les modes de réalisation décrits ci-dessus, ne doit pas être compris comme exigeant un tel agencement dans toutes les implémentations. Par exemple, les zones géographiques GEO₁ et GEO₂ peuvent être définies sous une outre forme qu'un cercle, par exemple sous la forme d'un rectangle ou d'un un carré. On définit alors de telles zones, non pas par la longueur de leur rayon, mais par la longueur de leurs côtés et/ou diagonales ou demie-diagonales. Également, le module de localisation et/ou de calcul d'itinéraire et/ou de calcul et/ou de traitement et/ou le générateur de carte, peuvent être des composants matériels et/ou logiciels du terminal EQu. Tout ou partie des étapes associées à ces éléments sont alors mis en œuvre dans le terminal EQu.

## Revendications

1. Procédé pour incorporer des positions géographiques de véhicules (V₁, V₄, V₆) disponibles à la réservation dans une carte numérique (C)-, ledit procédé comprenant les étapes suivantes :
- a) recevoir à un instant T0, depuis un terminal mobile utilisateur (EQ_{U}), la position géographique dudit terminal mobile et une requête de réservation (Gen_Req),
- b) calculer automatiquement, au moyen d'un module de calcul (35), des données définissant une première zone géographique (GEO₁) centrée sur la position géographique du terminal mobile (EQ_{U}) reçu à l'instant T0,
- c) calculer automatiquement, au moyen du module de calcul (35), des données définissant une seconde zone géographique (GEO₂) incluse dans la première zone géographique (GEO₁) et dont le centre correspond à la position géographique du terminal mobile (EQ_{U}) et dont le rayon correspond à une distance, laquelle distance est définie automatiquement ou est incluse dans la requête de réservation (Gen_Req) en étant renseignée par un utilisateur depuis une interface du terminal mobile (EQ_{U}),
- d) recevoir les positions géographiques réelles, à l'instant T0, de véhicules (V₁-V₆) disponibles à la réservation, lesquelles positions géographiques sont reçues d'équipements (EQ_{VEi}) embarqués dans lesdits véhicules (Vᵢ) ou sont reçues de terminaux mobiles d'utilisateurs utilisant lesdits véhicules,
- e) effectuer automatiquement, au moyen d'un module de traitement informatique (37), une première sélection de véhicules disponibles à la réservation (V₁, V₂, V₄, V₅, V₆) dont la position géographique réelle à l'instant T0, est incluse dans la première zone géographique (GEO₁),
- f) pour chacun desdits véhicules sélectionné lors de la première sélection :
-- f1) calculer automatiquement, au moyen d'un module de calcul d'itinéraire (34), un itinéraire (I₁, I₂, I₄, I₅, I₆) entre : un point de départ correspondant à la position géographique réelle dudit véhicule à T0; et un point d'arrivée défini par rapport à la position géographique du terminal mobile (EQ_{U}),
-- f2) calculer automatiquement, au moyen du module de calcul (35), une position géographique estimée du véhicule à un instant T2 sur l'itinéraire calculé, où T2>T0,
- g) effectuer automatiquement, au moyen du module de traitement informatique (37), une deuxième sélection de véhicules (V₁, V₄, V₆) disponibles à la réservation dont la position géographique estimée est incluse dans la seconde zone géographique (GEO₂),
- h) à un instant T1 tel que T2>T1≥T0 : incorporer automatiquement dans une carte numérique (C) affichée sur une interface graphique du terminal mobile (EQ_{U}), uniquement les positions géographiques estimées desdits véhicules (V₁, V₄, V₆) à l'instant T2 et qui sont sélectionnés lors de la deuxième sélection.

2. Procédé selon la revendication 1, comprenant les étapes suivantes :
- calculer automatiquement, au moyen du module de calcul (35), et pour chaque itinéraire (I₁, I₂, I₄, I₅, I₆) calculé à l'étape f1), le temps de trajet du véhicule concerné par ledit itinéraire, entre le point de départ et le point d'arrivée,
- effectuer une troisième sélection des véhicules (V₁, V₄, V₆) disponibles à la réservation dont le temps de trajet calculé est égal ou inférieur à un délai déterminé,
- réaliser l'étape h) uniquement pour les véhicules (V₁, V₄, V₆) sélectionnés lors de la troisième sélection et dont le temps de trajet calculé est égal ou inférieur au délai déterminé.

3. Procédé selon la revendication 2, dans lequel le délai utilisé pour effectuer la troisième sélection est un délai renseigné depuis une interface du terminal mobile (EQ_{U}), lequel délai est inclus dans la requête de réservation (Gen_Req).

4. Procédé selon l'une des revendications précédentes, dans lequel l'instant T2 correspond à l'instant T0 auquel est rajouté un délai renseigné depuis une interface du terminal mobile (EQ_{U}), lequel délai est inclus dans la requête de réservation (Gen_Req).

5. Procédé selon la revendication 4, dans lequel le rayon de la première zone géographique (GEO₁) est calculé automatiquement et dépend du délai renseigné et inclus dans la requête de réservation (Gen_Req).

6. Procédé selon l'une des revendications précédentes, dans lequel le rayon de la seconde zone géographique (GEO₂) est défini automatiquement en prenant en compte une distance moyenne calculée sur la base de distances de récupération habituellement renseignées par des utilisateurs.

7. Procédé selon l'une des revendications précédentes, dans lequel à l'étape h), la position géographique estimée de chaque véhicule (V₁, V₄, V₆) à l'instant T2 est affichée sur l'interface graphique du terminal mobile utilisateur (EQ_{U}), sous la forme d'un marqueur sélectionnable, chaque dit marqueur étant associé à un identifiant du véhicule concerné.

8. Système comportant un terminal mobile (EQ_{U}) d'un utilisateur (U) et un serveur informatique distant (SERV), configurés pour la mise en œuvre des étapes du procédé des revendications 1 à 7.

9. Produit programme d'ordinateur comprenant des instructions de code pour l'exécution d'un procédé selon la revendication 1, lorsqu'il est exécuté par un serveur informatique distant (SERV).

## Patentansprüche

1. Verfahren zum Einbetten von geografischen Positionen von Fahrzeugen (V₁, V₄, V₆), die für die Reservierung verfügbar sind, in eine digitale Karte (C), wobei das Verfahren die folgenden Schritte umfasst:
- a) Empfangen der geografischen Position des mobilen Endgeräts und einer Reservierungsanfrage (Gen_Req) zu einem Zeitpunkt T0 von einem mobilen Endgerät des Benutzers (EQ_{U}),
- b) automatisches Berechnen von Daten, mittels eines Berechnungsmoduls (35), die ein erstes geografisches Gebiet (GEO₁) definieren, das auf der geografischen Position des zum Zeitpunkt T0 empfangenen mobilen Endgeräts (EQ_{U}) zentriert ist,
- c) automatisches Berechnen von Daten, mittels des Berechnungsmoduls (35), die ein zweites geografisches Gebiet (GEO₂) definieren, das in das erste geografische Gebiet (GEO₁) eingeschlossen ist und dessen Mittelpunkt der geografischen Position des mobilen Endgeräts (EQ_{U}) entspricht und dessen Radius einer Entfernung entspricht, wobei diese Entfernung automatisch definiert wird oder in der Reservierungsanfrage (Gen_Req) durch Eingabe durch einen Benutzer über eine Schnittstelle des mobilen Endgeräts (EQ_{U}) enthalten ist,
- d) Empfangen der tatsächlichen geografischen Positionen, zu dem Zeitpunkt T0, von Fahrzeugen (V₁-V₆), die für die Reservierung verfügbar sind, welche geografischen Positionen von Ausrüstungen (EQ_{VEi}) empfangen werden, die in den Fahrzeugen (Vᵢ) eingebaut sind, oder von mobilen Endgeräten von Nutzern empfangen werden, die die Fahrzeuge nutzen,
- e) automatisches Durchführen, mittels eines EDV-Moduls (37), einer ersten Auswahl der zur Reservierung verfügbaren Fahrzeuge (V₁, V₂, V₄, V₅, V₆), deren tatsächliche geografische Position zum Zeitpunkt T0 in dem ersten geografischen Bereich (GEO₁) enthalten ist,
- f) für jedes der bei der ersten Auswahl ausgewählten Fahrzeuge:
-- f1) automatisches Berechnen, mittels eines Routenberechnungsmoduls (34), einer Route (I₁, I₂, I₄, I₅, I₆) zwischen: einem Startpunkt, der der tatsächlichen geografischen Position des Fahrzeugs bei T0 entspricht; und einem Zielpunkt, der in Bezug auf die geografische Position des mobilen Endgeräts (EQ_{U}) definiert ist,
-- f2) automatisches Berechnen, mittels des Berechnungsmoduls (35), einer geschätzten geografischen Position des Fahrzeugs zu einem Zeitpunkt T2 auf der berechneten Route, wobei T2>TO,
- g) automatisches Durchführen, mittels des EDV-Moduls (37), einer zweiten Auswahl von Fahrzeugen (V₁, V₄, V₆), die für die Reservierung verfügbar sind, deren geschätzte geografische Position in dem zweiten geografischen Bereich (GEO₂) enthalten ist,
- h) zu einem Zeitpunkt T1 wie T2>T1≥T0: automatisches Aufnehmen in eine digitale Karte (C), die auf einer grafischen Oberfläche des mobilen Endgeräts (EQ_{U}) angezeigt wird, nur der geschätzten geografischen Positionen der Fahrzeuge (V₁, V₄, V₆) zum Zeitpunkt T2 und derjenigen, die bei der zweiten Auswahl ausgewählt werden.

2. Verfahren nach Anspruch 1, umfassend die folgenden Schritte:
- automatisches Berechnen, mittels des Berechnungsmoduls (35), und für jede Route (I₁, I₂, I₄, I₅, I₆), die in Schritt f1) berechnet wird, der Fahrzeit des Fahrzeugs, das von der Route betroffen ist, zwischen Start- und Zielpunkt,
- Durchführen einer dritten Auswahl der zur Reservierung verfügbaren Fahrzeuge (V₁, V₄, V₆), deren berechnete Fahrzeit gleich oder kleiner als eine bestimmte Zeit ist,
- Umsetzen von Schritt h) nur für Fahrzeuge (V₁, V₄, V₆), die bei der dritten Auswahl ausgewählt wurden und deren berechnete Fahrzeit gleich oder kleiner als die festgelegte Zeit ist.

3. Verfahren nach Anspruch 2, wobei die für die Durchführung der dritten Auswahl verwendete Zeit eine von einer Schnittstelle des mobilen Endgeräts (EQ_{U}) angegebene Zeit ist, wobei die Zeit in der Reservierungsanfrage (Gen_Req) enthalten ist.

4. Verfahren nach einem der vorhergehenden Ansprüche, wobei der Zeitpunkt T2 dem Zeitpunkt T0 entspricht, zu dem eine von einer Schnittstelle des mobilen Endgeräts (EQ_{U}) angegebene Zeit hinzugefügt wird, wobei die Zeit in der Reservierungsanfrage (Gen_Req) enthalten ist.

5. Verfahren nach Anspruch 4, wobei der Radius des ersten geografischen Bereichs (GEO₁) automatisch berechnet wird und von der in der Reservierungsanfrage (Gen_Req) angegebenen und enthaltenen Zeit abhängt.

6. Verfahren nach einem der vorhergehenden Ansprüche, wobei der Radius des zweiten geografischen Bereichs (GEO₂ ) automatisch unter Berücksichtigung einer durchschnittlichen Entfernung definiert wird, die auf der Grundlage von üblicherweise von Benutzern eingegebenen Wiederfindungsentfernungen berechnet wird.

7. Verfahren nach einem der vorhergehenden Ansprüche, wobei in Schritt h) die geschätzte geografische Position jedes Fahrzeugs (V₁, V₄, V₆) zu dem Zeitpunkt T2 auf der grafischen Oberfläche des mobilen Benutzerendgeräts (EQ_{U}) in Form eines auswählbaren Markers angezeigt wird, wobei jeder Marker einer Kennung des betreffenden Fahrzeugs zugeordnet ist.

8. System, das ein mobiles Endgerät (EQ_{U}) eines Benutzers (U) und einen entfernten Computerserver (SERV) aufweist, die für die Implementierung der Verfahrensschritte der Ansprüche 1 bis 7 eingerichtet sind.

9. Computerprogrammprodukt, das Codeanweisungen zur Ausführung eines Verfahrens nach Anspruch 1 umfasst, wenn es von einem Computerserver (SERV) ausgeführt wird.

## Claims

1. Method for incorporating geographical positions of vehicles (V1, V4, V6) available for hire into a digital map (C), said method comprising the following steps:
- a) receiving at a time T0, from a user mobile terminal, (EQ_{U}), the geographical position of said mobile terminal and a hiring request (Gen_Req),
- b) automatically calculating, by means of a calculation module (35), data defining a first geographical area (GEO₁) centered on the geographical position of the mobile terminal (EQ_{U}) received at time T0,
- c) automatically calculating, by means of the calculation module (35), data defining a second geographical area (GEO₂) included in the first geographical area (GEO₁) and the center of which corresponds to the geographical position of the mobile terminal (EQ_{U}) and the radius of which corresponds to a distance, which distance is automatically defined or is included in the hiring request (Gen_Req) by being entered by said user from an interface of the mobile terminal (EQu),
- d) receiving the real geographical positions, at the time T0, of vehicles (V₁-V₆) available for hire, which geographical positions are received from equipment (EQ_{VEi}) embedded in said vehicles (Vᵢ) or are received from mobile terminals of users using said vehicles,
- e) automatically performing, by means of a computer processing module (37), a first selection of vehicles available for hire (V₁, V₂, V₄, V₅, V₆), the real geographical position of which at time T0, is included in the first geographical area (GEO₁),
- f) for each of said vehicles selected during the first selection:
-- f1) automatically calculating, by means of a route calculation module (34), a route (I₁, I₂, I₄, I₅, I₆) between: a point of departure corresponding to the real geographical position of said vehicle at T0; and a point of arrival defined with respect to the geographical position of the mobile terminal (EQ_{U}),
-- f2) automatically calculating, by means of the calculation module (35), an estimated geographical position of the vehicle at a time T2 on the calculated route, where T2> T0,
- g) automatically performing, by means of the computer processing module (37), a second selection of vehicles (V₁, V₄, V₆) available for hire, the estimated geographical position of which is included in the second geographical area (GEO₂),
- h) at a time T1 such that T2> T1≥T0: automatically incorporating in a digital map (C) displayed on a graphic interface of the mobile terminal, only the estimated geographical positions of said vehicles (V1, V4, V6) at the time T2 and which are selected during the second selection.

2. Method according to claim 1, comprising the following steps:
- calculating automatically, by means of the calculation module (35), and for each route (I₁, I₂, I₄, I₅, I₆) calculated in step f1), the travel time of the vehicle concerned by said itinerary, between the point of departure and the point of arrival,
- making a third selection of vehicles (V₁, V₄, V₆) available for reservation whose calculated travel time is equal to or less than a determined time,
- performing step h) only for the vehicles (V₁, V₄, V₆) selected during the third selection and the calculated travel time of which is equal to or less than the determined timeframe.

3. Method according to claim 2, in which the timeframe used to make the third selection is a timeframe entered from an interface of the mobile terminal (EQ_{U}), which timeframe is included in the hiring request (Gen_Req).

4. Method according to one of the preceding claims, in which the time T2 corresponds to the time T0 to which is added a timeframe entered from an interface of the mobile terminal (EQ_{U}), which timeframe is included in the hiring request (Gen_Req).

5. Method according to claim 4, in which the radius of the first geographical area (GEO₁) is calculated automatically and depends on the timeframe entered and included in the hiring request (Gen_Req).

6. Method according to one of the preceding claims, in which the radius of the second geographical area (GEO₂) is defined automatically by considering an average distance calculated based on the collection distances usually entered by users.

7. Method according to one of the preceding claims, in which in step h), the estimated geographical position of each vehicle (V₁, V₄, V₆) at the time T2 is displayed on the graphic interface of the user mobile terminal (EQ_{U}), in the form of a selectable marker, each said marker being associated with an ID of the vehicle concerned.

8. System comprising a mobile terminal (EQ_{U}11. of a user (U) and a remote computer server (SERV), configured for the implementation of the steps of the method of claims 1 to 7.

9. Computer program product comprising code instructions for the execution of a method according to claim 1, when it is executed by a remote computer server (SERV).
